Europäisches Patentamt

European Patent Office

Office européen des brevets

(11) Veröffentlichungsnummer: **0 009 052**
A1

# EUROPÄISCHE PATENTANMELDUNG

(21) Anmeldenummer: 78100696.0

(22) Anmeldetag: 17.08.78

(51) Int. Cl.³: **F 03 D 7/02, F 03 D 11/04**

(43) Veröffentlichungstag der Anmeldung: 02.04.80
Patentblatt 80/7

(84) Benannte Vertragsstaaten: **BE CH FR GB LU NL SE**

(71) Anmelder: **Messerschmitt-Bölkow-Blohm Gesellschaft mit beschränkter Haftung, Postfach 801109, D-8000 München 80 (DE)**

(72) Erfinder: **Wortmann, Franz Xaver, Prof. Dr.-Ing., Pfaffenwaldring 21, D-7000 Stuttgart (DE)**

(54) **Windenergieanlage mit aerodynamischer Selbststeuerung.**

(57) Windenergieanlage mit aerodynamischer Selbststeuerung, deren Rotorblätter unabhängig voneinander elastisch oder gelenkig mit der Rotornabe (1) verbunden sind und bei der eine kleine Schlagbewegung durch eine sehr hohe Übersetzung zu einer großen Anstellwinkeländerung führt, wodurch Corioliskräfte unterdrückt und die Größe der Luftkraft individuell für jedes Blatt konstant und unabhängig von Windstärke und -richtung bleibt.

EP 0 009 052 A1

MESSERSCHMITT-BÖLKOW-BLOHM          Ottobrunn, 25.10.78
        GESELLSCHAFT                BT01 Bi/ma
MIT BESCHRÄNKTER HAFTUNG           Az.: P 78 100 696.0
        MÜNCHEN                     8381 EP

## Windenergieanlage mit aerodynamischer Selbststeuerung

Die geringe Energiedichte des Windes erfordert von Windturbinen im Megawattbereich sehr große Abmessungen, die in technischer Hinsicht wegen der starken Massenzunahme schwer zu beherrschen sind und Kosten verursachen, die die Wirtschaftlichkeit dieser Energiequelle in Frage stellen.

Große Abmessungen bedeuten aber auch, daß die räumliche und zeitliche Ungleichförmigkeit des Windes insbesondere beim Rotor neue und stärkere Belastungen hervorruft als bei kleinen Windturbinen. Hier ist zu unterscheiden zwischen Belastungen, die der Rotor als interne Lasten aufnehmen kann und solchen, die er nach außen z. B. als Nutzmoment an Getriebe und Generator oder als Querkraft oder -moment auf den Turm abgibt. Offensichtlich ist es neben genereller Laufruhe am wichtigsten, das abgegebene Nutzmoment von der Windunruhe unabhängig zu machen, um die Lebensdauer der Anlage zu steigern.

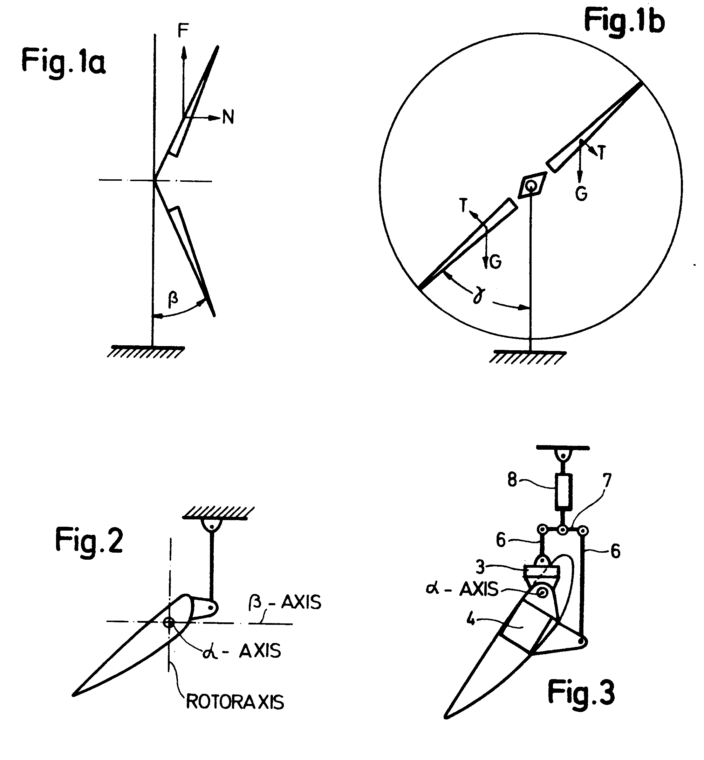

Die wichtigsten Kräfte und Bezeichnungen an einer Windturbine sind in Fig. 1 dargestellt. F sei die Fliehkraft, N die senkrecht auf der Drehebene stehende Luftkraftkomponente, T die tangentiale Komponente der Luftkraft, die in der Drehebene liegt und das Nutzmoment liefert, G das Blattgewicht. $\alpha$ ist die Anstellung des Rotorblattes gegen die Anblasrichtung, die aus Wind- und Umfangsgeschwindigkeit resultiert, der Winkel $\beta$ zwischen Drehebene und Rotationskegel der Blätter ist der Konuswinkel. Seine Änderung durch eine Winkel-

geschwindigkeit $\frac{d\beta}{dt}=\dot{\beta}$ heißt Schlagbewegung. Die Winkelgeschwindigkeit des Rotors ist $\Omega=2\pi n$. Eine kurzzeitige Änderung von $\Omega$ heißt Schwenkbewegung.

Die Kräfte sind von sehr unterschiedlicher Größe. Wenn die Nutzkraft T willkürlich gleich eins gesetzt wird, ist $N \approx 15$, $F \approx 50-75$ und bei großen Anlagen $G \approx 5-10$.

Ist der Konuswinkel $\beta > 0$, gibt es eine Position, bei der die Blätter in Richtung der Resultierenden N+F zeigen und die Blattwurzel keine Biegemomente erfährt. Bei passender Massenverteilung kann man erreichen, daß die Resultierende für alle Radien die gleiche Richtung annimmt, das Blatt also an keiner Stelle Biegemomente erfährt. Dieser Fall wird der Einfachheit halber im folgenden immer angenommen. Wenn man die Blattwurzel für einen mittleren Konuswinkel starr baut, sind die verbleibenden Wurzelmomente noch immer sehr groß, weil bei konstanter Drehzahl die Normalkraft N unmittelbar mit der Leistung verbunden ist und je nach Windstärke in weiten Grenzen variiert. Es ist deshalb naheliegend, durch eine gelenkige oder elastische Lagerung einen variablen Konuswinkel zuzulassen, um damit die Biegebelastung völlig abzubauen. Die Blattgewichte und Kosten lassen sich dadurch grob halbieren. Dieser Gedanke wurde bereits bei der 1.25 MW-Windenergieanlage von Smith-Putnam, die 1941 in USA in Betrieb ging, realisiert.

Die folgenden Ausführungen konzentrieren sich auf das Problem, wie trotz der Windturbulenz eine möglichst gleichmäßige Leistungsabgabe bei möglichst geringen Belastungen des Gesamtsystems realisiert werden kann. Dabei werden einige Voraussetzungen als bereits gegeben angesehen: 1) Das Rotorblatt ist für alle Drehzahlen und Windgeschwindigkeiten sicher gegen Flattern.
2) Drehachse, elastische Achse, aerodynamisches Zentrum und

0009052

die Schwereachse liegen dicht beim t/4-Punkt des Blattes.

3) Das Drehmoment des Blattes um den t/4-Punkt ist sehr klein.

4) Das Blatt wird als gerade angenommen, und die Torsionsfrequenz soll weit über allen anderen Eigenfrequenzen liegen.

5) Die Regelung des stationären Betriebsverhaltens wird als bekannt angesehen, während hier nur schnelle und kurzzeitige Vorgänge betrachtet werden, welche die Dynamik der Windenergieanlage bestimmen.

Wenn man wie bei Smith-Putnam die Blattwurzel hinsichtlich einer Schlagbewegung elastisch oder gelenkig ausführt, ergibt sich sofort folgendes Problem: jede Schlaggeschwindigkeit $\dot{\beta}$ erzeugt eine Trägheitskraft in Richtung der Drehebene, die als Corioliskraft bezeichnet wird und umso größer wird, je größer der Ausgangskonuswinkel ist. Als Trägheitskraft ist sie wiederum bei großen Anlagen überproportional wirksam und erreicht leicht ein Vielfaches der Nutzkraft T und damit neben der Biegebelastung der Wurzel eine untragbare Variation des Nutzmomentes. Es sollte also einerseits jeder Konuswinkel realisierbar sein, um Blattachse und Resultierende von F und N in Übereinstimmung zu bringen, andererseits sollte die zeitliche Änderung des Konuswinkels z. B. beim Einfall von Böen möglichst gering bleiben, um Corioliskräfte in der Drehebene zu vermeiden.

Dies läßt sich durch eine passende Kopplung von $\alpha$ und $\beta$ erreichen, d. h.: wird z. B. durch eine größere Luftkraft N der Konuswinkel vergrößert, sollte die Flügelanstellung $\alpha$ möglichst vermindert werden, damit die auslösende Kraft N reduziert wird. Fig. 2 gibt das einfachste Beispiel einer solchen Rücksteuerung. Dieses stabilisierende Prinzip wird z. B. beim Pfeilflügel moderner Verkehrsflugzeuge zur Böenminderung und beim Hubschrauber unter der Bezeichnung $\delta_3$-Winkel zur Stabilisierung angewendet und ist auch bereits für Windturbinen vorgeschlagen worden. DBP 805 388 (1951).

0009052

Um die Unterschiede zu den Ansprüchen des DBP 805 388 her- auszuarbeiten, muß kurz auf die dort fixierten Vorstellungen eingegangen werden. Das Ziel dieses Patentes ist, sowohl die Drehzahl als auch die Schubbelastung einer Windturbine zu begrenzen, stellt also einen Überlastschutz für das offensichtlich klein gedachte Windrad dar. Die Drehzahl soll über eine Fliehkraftmasse geregelt werden: Soll die Erdschwere bei horizontaler Drehachse nicht als untragbare Störgröße auf die Fliehkraftmasse wirken, muß sie durch eine gleich große Gegenmasse an einem zweiten Flügel ausgeglichen werden. Auch aus dem Text (Zeile 8 und 67) geht hervor, daß es sich beim DBP 805 388 um einen zweiflügeligen Rotor handelt, wobei beide Blätter sowohl unter Fliehkraft- als auch unter Luftkrafteinfluß gemeinsam im gleichen Sinn ausgesteuert werden. Man bezeichnet das heute als kollektive Steuerung.

Ein solcher Vorschlag ist jedoch für große Rotoren ungeeignet und muß vielmehr durch eine individuelle und vom gegenüberliegenden Blatt völlig unabhängige Steuerung ersetzt werden. Auch der Gedanke einer einfachen Drehzahlregelung ist für große Rotoren sekundär, weil sie im allgemeinen einen Synchrongenerator antreiben, der von einem starken Netz stabilisiert ist. Weiterhin ist es für große Rotoren unvorstellbar, daß man, wie hier vorgeschlagen, negative Konuswinkel vorsieht und Fliehkraft und Luftkraft gemeinsam als Moment auf die Blattwurzel wirken. Man muß vielmehr beide Größen gegeneinander ausspielen, um die Wurzelmomente zu reduzieren.

Darüberhinaus kann der Vorschlag des DBP 805 388 den speziellen Lastfall "volle Drehzahl - plötzlicher Windausfall" nicht beherrschen, weil die vorgesehene Blattlagerung nur ein Ausweichen nach rückwärts, nicht aber nach vorn gegen die Windrichtung erlaubt.

Eine individuelle Blattsteuerung bei positiven Konuswinkeln, wie sie hier vorgeschlagen wird, eröffnet dagegen neue und entscheidend wichtige Möglichkeiten:

1. Wird z. B. ein zweiblättriger Rotor in Bodennähe von einem schwachen, in der Höhe jedoch von einem starken Wind beaufschlagt, muß die Anstellwinkeländerung an jedem Blatt nicht in gleicher, sondern in entgegengesetzter Richtung erfolgen, wenn der Konuswinkel konstant bleiben soll und keine Corioliskräfte auftreten sollen. Andernfalls würde ein Biegemoment auf die Rotorachse erzeugt, das nicht mehr zu beherrschen ist.

2. Bei schräger Anströmung des Rotors würde eine kollektive Steuerung zu einem unerwünschten Richtmoment um die Hochachse des Rotors führen. Die individuelle Steuerung dagegen macht den Rotor seitenwindunempfindlich. Das ist vor allem wichtig, wenn die Rotorachse gegen die Horizontale geneigt ist, um den nötigen Freigang der Blätter vom Turm oder von der Turmabspannung zu schaffen. Bei individueller Steuerung kann dann der Wind kein Kippmoment ausüben, das zur Kollision führt. Wenn eine schräge Anblasung der Windturbine nicht zu einem Kippmoment führt, entfällt auch die primäre Ursache für das sogenannte "Rotor-whirl-Flattern" ("Rotor-Wirbel-Flattern").

3. Bei einem Rotor ohne (individuelle) $\alpha$-$\beta$ -Steuerung läßt sich z. B. bei einer Winddrehung die Rotorachse nur sehr langsam in die neue Richtung bewegen, wenn man große Kreiselmomente (Präzessionskräfte) vermeiden will. Bei individueller Steuerung werden die Kreiselkräfte bei den üblichen Blattgewichten völlig von den Luftkräften überspielt, und ein schnelles Eindrehen auf neue Windrichtungen ist problemlos und führt zu vereinfachten Turmkonstruktionen.

4. Die individuelle Steuerung enthält natürlich die gleiche Wirkung wie eine kollektive Steuerung gegenüber Böen. Sie wirkt aber auch dann noch, wenn nur ein Blatt von einer Bö getroffen wird.

5. Nicht nur der oben erwähnte Lastfall, sondern fast alle übrigen Lastannahmen, die bei Windturbinen üblicherweise notwendig sind, werden durch die $\alpha$-$\beta$ -Kopplung auf eine Normalbelastung reduziert.

Die vorgenannten Eigenschaften kommen nur dann zum Tragen, wenn die Anstellwinkeländerung $\Delta\alpha$ bei Änderung des Konuswinkels $\Delta\beta$ genügend groß ist. Das Verhältnis $\Delta\alpha/\Delta\beta$ soll Werte von 2 bis 20 erreichen, andernfalls ist die Einschwingzeit auf den neuen Gleichgewichtszustand relativ zur Umlaufzeit des Rotors zu groß.

Eine starke $\alpha$-$\beta$ -Kopplung bedeutet also eine aerodynamische Stabilisierung des Konuswinkels, die dem Rotorblatt hinsichtlich der Schlagbewegung eine hohe Eigenfrequenz verleiht, so als ob die Wurzel eine strukturelle Steifigkeit besäße. Die aerodynamische Steifigkeit hat noch den zusätzlichen Vorzug, außerordentlich stark gedämpft zu sein.

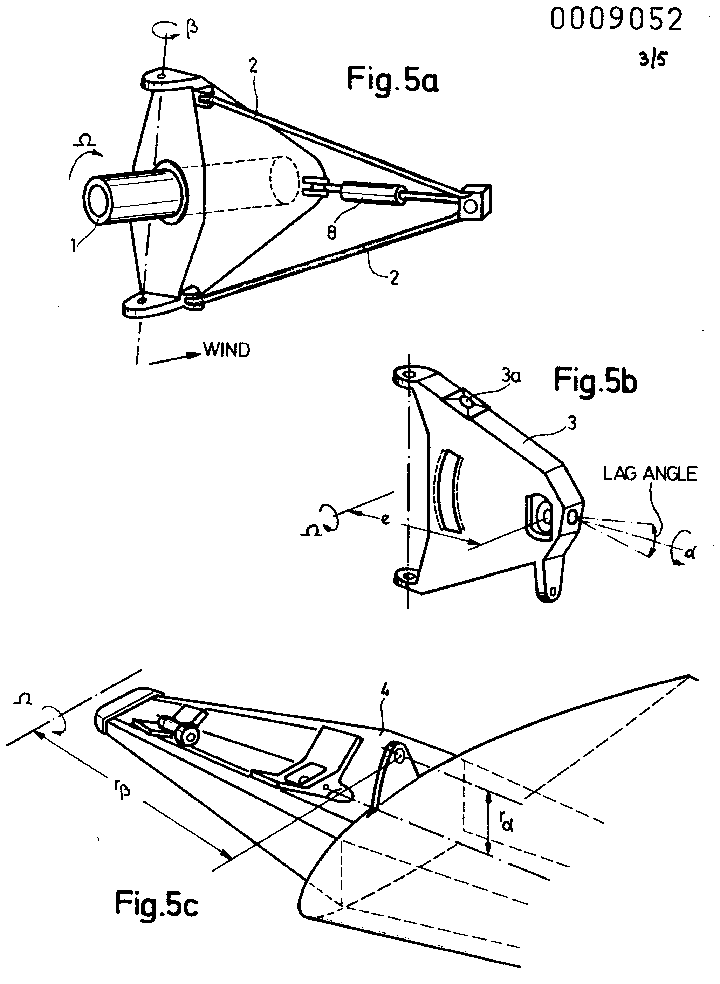

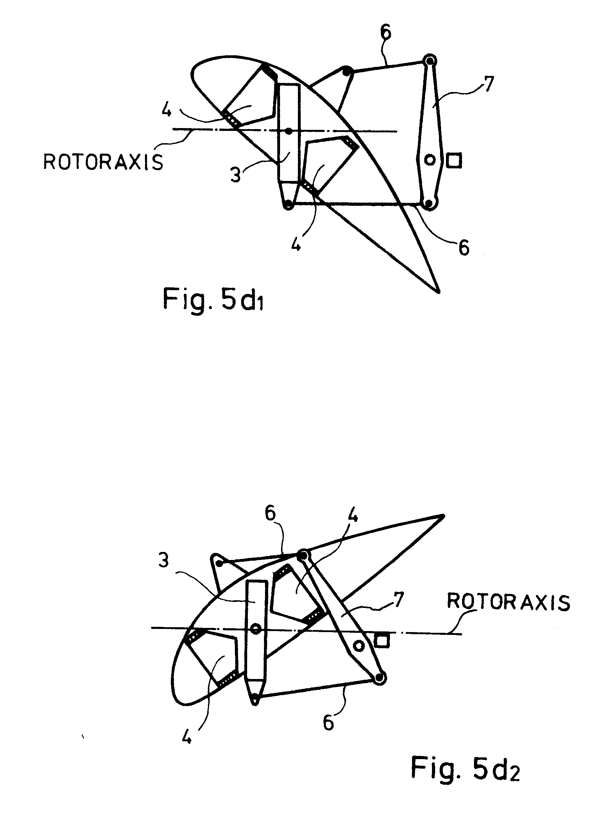

Die erste Möglichkeit, eine hohe Winkelübersetzung mechanisch zu verwirklichen, besteht darin, den Gelenkhebel, der das Rotorblatt in Fig. 2 mit einem Festpunkt verbindet, in möglichst großem Abstand $r_\beta$ von der Drehachse des Rotors anzubringen, vgl. Fig. 5. Das Übersetzungsverhältnis wird dann durch das Radienverhältnis $r_\beta/r_\alpha$ bestimmt. Eine weitere Möglichkeit, noch größere Übersetzungen ohne große Lagerkräfte zu realisieren, besteht erfindungsgemäß darin, daß man wie in Fig. 3 nicht nur die Bewegung des drehbaren Rotorblattes, sondern auch die Bewegung der Blatthalterung oder der Schwinge 3 relativ zu einem Festpunkt mit heranzieht. Wenn in Fig. 3 der mittlere Drehpunkt in der Mitte des Kipphebels 7 liegt, würde die $\alpha$-Änderung gerade verdoppelt. Eine Verschiebung des mittleren Drehpunktes zum

0009052

Gelenkhebel der Schwinge 3 hin erhöht die Übersetzung sehr schnell, und zusammen mit einem großen $r_\beta/r_\alpha$ lassen sich die nötigen Übersetzungen rein mechanisch leicht mit einfachen Gelenkhebeln verwirklichen.

Die Kombination der Merkmale einer gelenkigen oder elastischen Blattaufhängung mit einer individuellen Selbststeuerung der Rotorblätter führt erfindungsgemäß zu wichtigen neuen Eigenschaften des Rotors, die insgesamt die Herstellungskosten senken und das Betriebsverhalten und die Lebensdauer der Anlage verbessern.

Eine individuelle Selbststeuerung der Rotorblätter hält bei hoher Übersetzung die Größe der Luftkraft, unabhängig von der Windscherung und von ähnlich langsamen Böen, praktisch konstant. Konstanz der Normalkraft N bedeutet konstanter Konuswinkel und Vermeidung von tangentialen Corioliskräften. Die Anpassung an geänderte Windbedingungen erfolgt sehr schnell, weil die Schlagschwingung mehr als zehnfach schneller als die Umlauffrequenz des Rotors sein kann. Sie ist zusätzlich stark gedämpft. Damit ist _eine_ Grundaufgabe für die Laufruhe der Windturbine auf einfache Weise weitgehend gelöst.

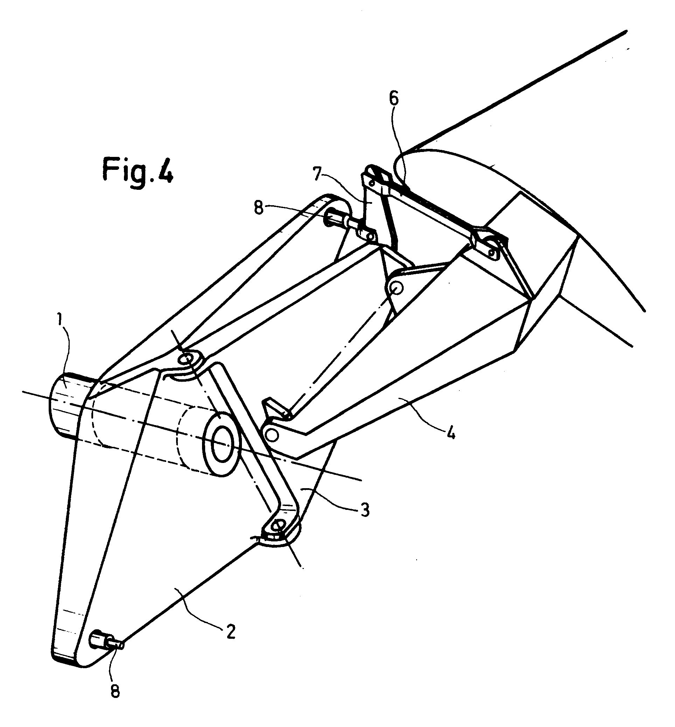

Fig. 4 zeigt die Rotornabe mit den wesentlichen Bauelementen. 1 ist die Rotorachse, 2 überträgt Biege- und über eine Rutschkupplung Torsionsmomente auf 1 und liefert das Festlager für das Steuergestänge nach Fig. 3. Die Schwinge 3 ist gelenkig gelagert und erlaubt alle Konuswinkel, die aus der Resultierenden aus F und N bzw. der Position des Gelenkhebels 7 folgt. 4 ist die Flügelwurzel, die alle Biegemomente über eine große Einspannlänge auf 3 überträgt. Anstelle der üblichen großen Lager, die eine kreisrunde Flügelwurzel umspannen, sollen kleine, robuste und einfache Lager treten.

Fig. 5 zeigt eine Variante, bei der die Krafteinleitung in den Flügel modifiziert ist: der Flügelholm läuft in 5c zur Wurzel hin in zwei getrennte Träger aus, zwischen denen die Lager untergebracht sind. Das Stellglied 8 in 5a bildet Teil eines Dreibeins, um die großen Stellwege einfacher zu erreichen. Die Lagerung der Flügelwurzel in der Schwinge in 5b erlaubt hier eine Schwenkbewegung von etwa $\pm 10^{0}$, die weiter unten noch erläutert wird. In $5d_1$ und $5d_2$ sind schließlich die normale Arbeitsstellung und die Segelstellung angedeutet.

Die bislang diskutierte Selbststeuerung bezog sich im wesentlichen auf die Konstanthaltung der Normalkräfte des Rotors. Als zweite grundlegende Aufgabe bleibt noch das Problem, die in der Drehebene liegenden Tangentialkräfte , soweit sie nicht das Nutzmoment darstellen, zu vermindern.

Die schwerwiegendste Tangentialkraft entsteht durch das Gewicht der Rotorblätter. Bereits bei statischer Betrachtungsweise begrenzt das aus dem Gewicht resultierende Wechselbiegemoment die Lebensdauer des Blattes oder die maximale Baugröße des Rotors. Diese Belastung wird noch verstärkt, wenn die Eigenfrequenz des Rotors bezüglich der Schwenkbewegung in die Nähe der Rotordrehfrequenz $\Omega$ kommen.

Wenn man den Konuswinkel durch die oben geschilderte aerodynamische Selbststeuerung stabilisiert und fixiert hat, kann man die Schwenkbewegung im Fliehkraftfeld als eine unabhängige Schwingungsbewegung ansehen, durch die sich eine neue Möglichkeit zur Reduktion der Tangentialkräfte eröffnet. Der Schwinger "Rotorblatt" (Pendel "Rotorblatt im Fliehkraftfeld") führt unter dem Einfluß der Schwerkrafterregung erzwungene Schwingungen aus, deren Amplituden und Phasenlage primär vom Verhältnis der Erregerfrequenz $\Omega$ zur Eigenfrequenz des Schwingers abhängen. Wenn die letztere viel niedriger ist als $\Omega$, etwa ein Drittel oder noch kleiner, wird die

0009052

Schwingungsamplitude gegenüber dem statischen Fall etwa auf ein Viertel reduziert und die Schwingungsbewegung ist um 180° gegen die Erregung versetzt. Für den Rotor bedeutet das eine entsprechende Reduktion der Wurzelkräfte, und die Rotorblätter zeigen bei annähernd horizontaler Position eine Schwenkbewegung nach oben. Die Rotorachse erfährt also durch die Schwerkraft eine aufwärtsgerichtete Vertikalkraft, übrigens mit doppelter Rotorfrequenz.

Läßt man für einen Augenblick die Schwerkraft außer acht und betrachtet den nicht ganz unmöglichen Sonderfall, bei dem die obere Rotorhälfte vom Wind beaufschlagt wird, die untere dagegen eine windstille Zone durchschneidet, so entstehen aerodynamische Tangentialkräfte, die in der oberen wie unteren Rotorhälfte beide gleichsinnig horizontal gerichtet sind und die Rotorachse seitlich belasten, aber mit stark verminderter Amplitude.

Wie kann die Eigenfrequenz der Schwenkbewegung gegenüber $\Omega$ erniedrigt werden? Die einfachste Möglichkeit besteht darin, das äußere Lager der Flügelwurzel nicht nur für die $\alpha$-Verstellung heranzuziehen, sondern ihm auch die Freiheit zu geben, um rund $\pm 10°$ zu schwenken. Das innere Lager muß dann beim Schwenken in der Schwinge 3 gleiten.

Die Achse des inneren Lagers und der Punkt 3a der Schwinge 3 in Fig. 5, können über Gelenklager mit einem hydraulischen Dämpfungselement verbunden sein. Sieht man zunächst von der Dämpfung ab, stellt sich bei Solldrehzahl je nach Nutzmoment ein bestimmter stationärer Schwenkwinkel bis zu zehn Grad zwischen Radius und Blattachse ein, der in Fig. 5b nicht gezeichnet ist. Damit ist die Nullage der Schwenkschwingung gegeben.

Eine strukturelle Feder ist für die Schwenkschwingung voraussichtlich überflüssig, weil die Fliehkraft diese Funktion übernimmt. (Gegebenenfalls kann jedoch das stationäre Nutzmoment am inneren Lager mit einer Gasfeder abgenommen werden, deren Kraftanstieg genügend klein ist, um die Schwenkfrequenz nur wenig zu erhöhen.) Die Eigenfrequenz kann am
leichtesten durch die Wahl des Abstandes e (vg. Fig. 5.b ),
also des äußeren Lagers von der Rotorachse, variiert werden. Etwa 5-10% des maximalen Blattradius ergeben die gewünschten Frequenzverhältnisse.

Das hydraulische Dämpfungselement kann eine Doppelfunktion
übernehmen. Durch die Dämpfung wird die Schwingungsamplitude der Schwerkrafterregung nochmals vermindert und damit
unbedeutend. Gleichzeitig wird der Sonderfall, daß eine Folge von Böen die Eigenfrequenz der Schwenkbewegung anregen
sollte (Etwa 10 sec. Schwingungszeit), beherrschbar. Es
liegt auf der Hand, daß kurzzeitigere Böen von diesem passiven System nahezu völlig absorbiert und nicht auf die Rotorachse übertragen werden.

Die zweite Funktion wird beim Unterschreiten der Solldrehzahl beim Anlaufen und Abstellen des Rotors benötigt: durch
Schließen des Dämpfungsventils wird die Schwenkmöglichkeit
verriegelt. Das Blatt nimmt dann bezüglich des Schwenkens
eine strukturell bedingte Eigenfrequenz an, die oberhalb der
Drehfrequenz $\Omega$ liegen sollte. Beim An- und Abstellen tritt
also keine Schwingungsgefährdung auf. Allerdings muß während
des An- und Auslaufens die volle Gewichtsbelastung ertragbar sein.

Wenn der Rotor durch die beschriebenen Maßnahmen geringere
und gleichmäßigere Lasten auf den Turm ausübt, ergeben sich
auch neue und kostensparende Möglichkeiten für die Auslegung
des Turmes.

Für den Rotorturm gelten folgende Leitsätze:

Der Turm sollte einen möglichst geringen Bauaufwand erfordern, einen möglichst geringen Luftwiderstand haben und aus größerer Entfernung möglichst wenig sichtbar sein.

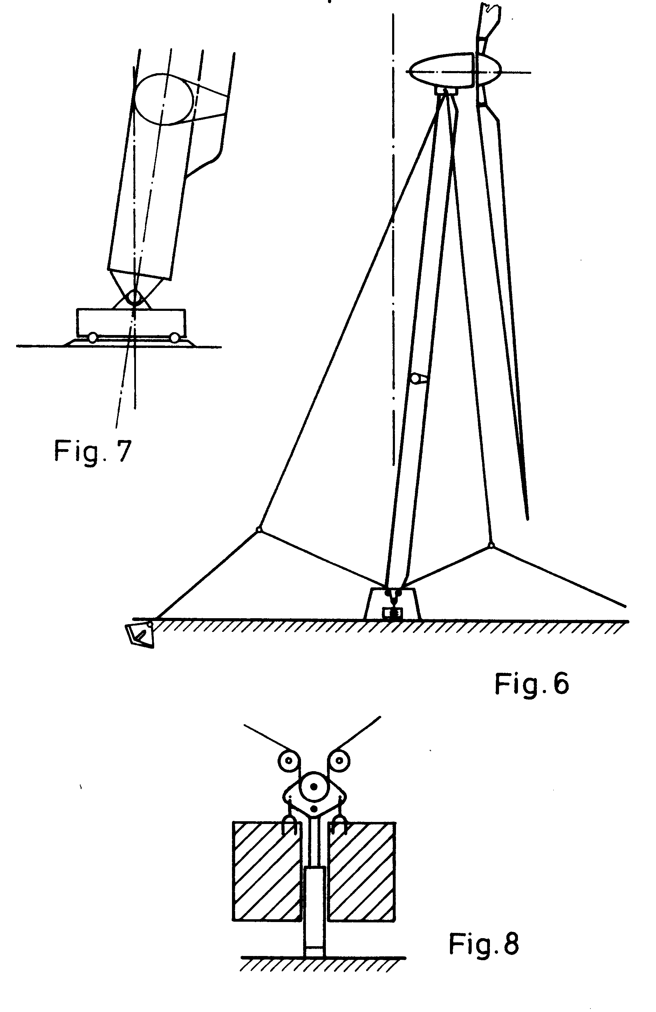

Fig. 6 zeigt einen abgespannten Rohrturm, der den Forderungen nahekommt. Turm und Turmkopf bilden eine Einheit und drehen sich gemeinsam in den Wind. Das Fußlager ist in Fig. 7 skizziert. Am Kopflager des Turms laufen die Abspannseile zusammen und belasten den Turm zusätzlich zum Eigen- und Kopfgewicht mit den Seilspannungen, die aus dem praktisch horizontalen Rotorzug resultieren. Um diese Spannungen klein zu halten, ist ein großer Abspannwinkel erwünscht, der andererseits unerwünscht ist, weil für den Rotor der notwendige Freigang bleiben muß. Wenn man den Hauptseilen einen Längenüberschuß gibt und die Lose durch weitere Seile zum Mastfuß hin straffzieht, kann man durch eine schräge Maststellung sowohl den Freigang als auch den großen Abspannwinkel verwirklichen. Fig. 6 zeigt die Situation bei geringem Rotorzug. Bei Steigerung der Zugkraft wird die luvseitige Abspannung straffer und die leeseitige näher an den Turm herangezogen.

Eine wesentliche Funktion übernehmen die zum Turmfuß laufenden Hilfsseile. Sie erhalten z. B. über Gewichte eine Zugspannung, und ihre Längenänderung wird zur Dämpfung der Turmbewegung herangezogen. Die Dämpfung ist wichtig, weil die Turmeigenfrequenz unter der Rotorfrequenz liegt und beim Anfahren des Rotors die Resonanzstelle beherrschbar bleiben muß. Die Dämpfung bestimmt zusätzlich die Geschwindigkeit, mit der sich der Turm um die Vertikale zu drehen vermag.

Da der Turm auch in Ruhelage nicht senkrecht steht, dreht er sich allein durch Luftkräfte in den Wind. Zusammen mit dem Rotor bildet er gewissermaßen seine eigene Windfahne. Durch den in Fig. 7 skizzierten Fuß wird auch die Rotorachse und die Tropfenform des Mastes in Windrichtung gedreht. Die richtig orientierte Tropfenform des Mastes eliminiert die ansonsten sehr störende Turm-Rotor-Wechselwirkung nahezu völlig. Seitenkräfte auf den Turmkopf können den Turm nicht um die Turmachse, sondern nur um die vertikale Achse drehen. Die Dämpfung der Abspannseile dämpft deshalb auch die mit solcher Erregung verbundene Schwingungsbewegung.

Die außermittige Ruhelage des Turmes kann nach Art der Fig. 8 erreicht werden: die Abspannungen gegenüberliegender Seile laufen hier über drei Umlenkrollen von einer Seite zur anderen.

Die mittler Rolle trägt das Spanngewicht, dessen Hubbewegung durch ein Dämpfungselement gebremst wird. Die Seillänge wird so bemessen, daß das Gewicht auf dem Boden aufsitzt, wenn der Turm etwa drei bis fünf Grad schräg steht. Dadurch bleibt der Turm bei Windstille auf einem entsprechenden Rotationskegel im Gleichgewicht. Das Innere des Kegels ist für den Turm unerreichbar, selbst wenn der Rotor durch eine plötzliche Winddrehung genau entgegengesetzt angeblasen wird. Auch in diesem Fall muß die Anlage eine gedämpfte Drehbewegung um die Vertikale ausführen, um sich in den Wind zu stellen.

MESSERSCHMITT-BÖLKOW-BLOHM            Ottobrunn, 25.10.78
        GESELLSCHAFT                  BT01 Bi/ma
MIT BESCHRÄNKTER HAFTUNG             Az.:   78 100 696.0
        MÜNCHEN                       8381 EP

<u>Windenergieanlage mit aerodynamischer Selbststeuerung</u>

P a t e n t a n s p r ü c h e

1. Windenergieanlage, dadurch g e k e n n z e i c h n e t,
   daß die Rotorblätter unabhängig voneinander elastisch oder
   gelenkig mit der Rotornabe verbunden sind und eine kleine
   Schlagbewegung durch eine sehr hohe Übersetzung zu einer
   großen Anstellwinkeländerung führt, wodurch Corioliskräfte
   unterdrückt und die Größe der Luftkraft individuell für jedes Blatt konstant und unabhängig von Windstärke und -richtung bleibt.

2. Windenergieanlage nach Anspruch 1, dadurch g e k e n n -
   z e i c h n e t, daß zur Steigerung des Übersetzungsverhältnisses die Schlagbewegung sowohl des drehbaren Flügels
   als auch der nicht drehbaren Flügelhalterung benutzt wird.

3. Windenergieanlage nach Anspruch 1 und 2, dadurch g e k e n n -
   z e i c h n e t, daß die Wurzel der Rotorblätter über eine
   große Einspannlänge mit der Rotornabe verbunden sind und die
   Lager der Anstellwinkelachse in ihren Abmessungen wesentlich kleiner als die Wurzelabmessungen sind.

- 2 -

4. Windenergieanlage nach Anspruch 1 bis 3, dadurch  g e - k e n n z e i c h n e t, daß die Rotorblätter eine Schwenkschwingung ausführen können, deren Eigenfrequenz beim rotierenden Rotor weit unter der Drehfrequenz des Rotors liegt, um auf diese Weise erzwungene Schwingungen auszuführen, wodurch die tangentiale Belastung der Blattwurzeln hinsichtlich der Gewichtskräfte oder der Luftkräfte aus Windscherung oder Böen vermindert wird.

5. Windenergieanlage nach Anspruch 1 bis 4, dadurch  g e - k e n n z e i c h n e t, daß die Schwenkbewegung bei rotierendem Rotor durch ein Dämpfungsglied weiter reduziert und durch Verriegeln des Dämpfungsgliedes beim An- und Auslaufen des Rotors unterdrückt wird.

6. Windenergieanlage nach Anspruch 1 bis 5, dadurch  g e - k e n n z e i c h n e t, daß die Rotornabe durch eine Rutschkupplung mit der Rotorachse verbunden ist.

7. Windenergieanlage nach Anspruch 1 bis 6, dadurch  g e - k e n n z e i c h n e t, daß der Rotorturm eine Abspannung mit variabler Kippung erhält, um sowohl die Abspannbasis als auch den Freigang des Rotors von der Abspannung zu vergrößern.

8. Windenergieanlage nach Anspruch 1 bis 7, dadurch  g e - k e n n z e i c h n e t, daß der Turm auch in Ruhelage nicht senkrecht steht.

- 3 -

9. Windenergieanlage nach Anspruch 1 bis 8, dadurch g e -
   k e n n z e i c h n e t, daß Turm und Turmkopf eine Einheit bilden und daß der Turm einen tropfenförmigen oder
   elliptischen Querschnitt erhält.

10. Windenergieanlage nach Anspruch 1 bis 9, dadurch g e -
    k e n n z e i c h n e t, daß am Turmfuß die Bewegung des
    Kippens und Drehens voneinander getrennt sind, damit sowohl die Rotorachse als auch die Tropfenform des Turmes
    immer radial zum Drehpunkt zeigt.

Fig.1a

Fig.1b

Fig.2

β - AXIS
α - AXIS
ROTORAXIS

Fig.3

Fig.4

Fig.5a

WIND

Fig.5b

LAG ANGLE

Fig.5c

Fig. 5d₁

Fig. 5d₂

0009052

Fig. 7

Fig. 6

Fig. 8

Europäisches
Patentamt

**EUROPÄISCHER RECHERCHENBERICHT**

0009052

Nummer der Anmeldung

EP 78 10 0696

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - C - 906 440</u> (BAUER) <br> * Seite 2, Zeilen 40-55 * | 1 |
| | <u>US - A - 2 516 576</u> (JACOBS) <br> * Spalte 3, Zeile 55 bis Spalte 4, Zeile 10 * | 1 |
| | <u>FR - A - 2 293 589</u> (BOUIGES) <br> * Ansprüche * | 1 |
| | <u>GB - A - 718 127</u> (TERZI) <br> * Seite 3, Zeilen 35-88 * | 1 |
| | <u>NL - A - 76 09651</u> (STICHTING ~~ENERGIE ONDERZOEK~~) <br> * Seite 9, Zeilen 8-25; Ansprüche; Abbildungen 15,16 * | 1-3 |
| | <u>GB - A - 555 439</u> (S. MORGAN SMITH CO.) <br> * Ansprüche 1-3 * | 1 |
| D | <u>DE - C - 805 388</u> (SAUER) <br> * Seite 2, Zeilen 31-61 * | 1 |
| | <u>FR - A - 2 346 572</u> (ROBERT) <br> * Ansprüche 1,4 * | 7 |

**KLASSIFIKATION DER ANMELDUNG (Int.Cl.²)**

F 03 D 7/02
11/04

**RECHERCHIERTE SACHGEBIETE (Int. Cl.²)**

F 03 D 7/02
7/04
11/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-04-1979 | DE WINTER |

EPA form 1503.1   06.78